**Europäisches Patentamt**

**European Patent Office**

**Office européen des brevets**

(19)

(11) Veröffentlichungsnummer: **0 118 847**

**B1**

# EUROPÄISCHE PATENTSCHRIFT

(45) Veröffentlichungstag der Patentschrift:
12.06.87

(21) Anmeldenummer: 84102220.5

(22) Anmeldetag: 02.03.84

(51) Int. Cl.⁴: **B 29 C 47/36**

(54) Verfahren und Vorrichtung zum Füllen von thermoplastichem Material mit Verstärkungsstoff.

(30) Priorität: 14.03.83 DE 3309007

(43) Veröffentlichungstag der Anmeldung:
19.09.84 Patentblatt 84/38

(45) Bekanntmachung des Hinweises auf die Patenterteilung:
12.06.87 Patentblatt 87/33

(84) Benannte Vertragsstaaten:
BE CH DE FR GB IT LI NL

(56) Entgegenhaltungen:
DE-A-1 604 396
DE-A-1 927 271
DE-A-1 927 271
DE-A-2 001 696
DE-A-2 614 136

PLASTVERARBEITER, Band 31, Heft 3, März 1980,
Speyer am Rhein; K.H. STADE "Energieumsetzung
bei der Herstellung von glasfaserverstärkten und
gefüllten Thermoplastenauf einem
kontinuierlichen Kneter", Seiten 125-132

(73) Patentinhaber: AUTOMATIK Apparate-
Maschinenbau GmbH, Ostring 19, D-8754
Grossostheim (DE)

(72) Erfinder: Stade, Kurt H., Dipl.- Ing.,
Rehhaagstrasse 5, CH- 4410 Liesthal (CH)
Erfinder: Glawion, Erwin, Dipl.- Ing., Anne- Frank-
Strasse 21, D-8754 Grossostheim 2 (DE)

(74) Vertreter: Bardehle, Heinz, Dipl.- Ing., Patent- und
Rechtsanwälte Bardehle- Pagenberg- Dost-
Altenburg & Partner Galileiplatz 1 Postfach 86
06 20, D-8000 München 86 (DE)

## Beschreibung

Die Erfindung bezieht sich auf ein Verfahren und eine Vorrichtung zum Füllen von thermoplastischem Material mit Verstärkungsstoff, bei dem das als Granulat zugeführte thermoplastische Material in einem Schneckenextruder aufgeschmolzen wird, bei dem im Mischbereich des Extruders der Schmelze Zusatzgranulat und danach getrennt davon der Verstärkungsstoff zugeführt wird.

Bei einem aus der DE-A- 26 01 696 bekannten Verfahren wird das thermoplastische Material dem Eingang eines Einschneckenextruders in Form von Granulat zugeführt, das dann im Aufschmelzbereich des Extruders erschmolzen und im Mischbereich mit dem Verstärkungsstoff versehen wird. Zu diesem Zweck ist zu Beginn des Mischbereichs ein besonderer Zuführungskanal für den Verstärkungsstoff vorgesehen, der dann längs des Mischbereichs zwecks Homogenisierung des Materials mit dem erschmolzenen thermoplastischen Material vermischt wird.

Gemäß der DE-A- 26 14 136 kann man bei einem Doppelschneckenextruder in dessen Mischbereich auch mehrere Zuführungskanäle für Verstärkungsstoffe vorsehen.

Da nun für das Einmischen von Verstärkungsstoffen eine gewisse Extruderlänge notwendig ist, um die gewünschte Homogenisierung des Materials zu erhalten, ergibt sich bei diesem bekannten Verfahren der unerwünschte Effekt, daß das erschmolzene thermoplastische Material über eine beträchtliche Länge im Mischbereich geführt werden muß, was häufig die Eigenschaften des thermoplastischen Materials ungünstig beeinflußt. Aus diesem Grunde muß man entweder derartige Schneckenextruder mit relativ geringer Drehzahl betreiben oder diese zusätzlich im Mischbereich kühlen, um eine zu lange dauernde Überhitzung des thermoplastischen Materials zu vermeiden.

Um diesem unerwünschten Effekt entgegenzuwirken, ist gemäß einem Artikel aus der Zeitschrift "PLASTVERARBEITER" Heft 3, 1980, Seiten 125 bis 132, vorgeschlagen worden, im Zusammenhang mit der Verwendung von Glasfasern als Verstärkungsstoff diese zusammen mit Zusatzgranulat über den gleichen Zuführungskanal am Anfang des Mischbereichs einem Schneckenextruder zuzuführen. Die Beimengung des Zusatzgranulats führt dann zu einer Abkühlung des im Mischbereich enthaltenen, aufgeschmolzenen thermoplastischen Materials und wirkt somit dem Effekt entgegen, daß das Material zu lange einer hohen Temperatur ausgesetzt ist. Es hat sich jedoch gezeigt, daß sich vor allem im gemeinsamen Zuführungskanal für die Glasfasern und das Zusatzgranulat eine erhebliche Reibung zwischen diesen Stoffen ergibt, was zu einer weitgehenden Zerstörung der Glasfasern, in jedem Falle aber zu deren unerwünschter Verkürzung führt. Außerdem ergibt sich hierbei eine starke Abnutzung an den Wänden des Zuführungskanals.

Es ist bei einem gattungsgemäßen Verfahren aus der DE-A- 1 927 271 bekannt, zum Einarbeiten von Glasfasern, die insbesondere in Form endloser Stränge vorliegen, in thermoplastische Kunststoffe mit engem Schmelzbereich im Mischbereich des Extruders der Schmelze zunächst das Zusatzgranulat und danach getrennt davon die Glasfasern beizumischen. Diese Art der getrennten Zuführung dient dabei dem Zweck, eine Zerkleinerungswirkung des Zusatzgranulats auszunutzen, die umso größer ist, je kürzer der Weg des ungeschmolzenen Zusatzgranulats bis zu einer Knetvorrichtung ist, die nach der Zuführungsstelle für die Glasfasern angeordnet ist, da das Zusatzgranulat sich zu trockenen Klumpen zusammenballt, die die Glasfasern jedoch so stark zerkleinern, daß diese einen unerwünscht hohen Anteil an Feinbruch aufweisen, der zu einer Versprödung des Endproduktes führt.

Der Erfindung liegt die Aufgabe zugrunde, dieser Zerkleinerungswirkung des Zusatzgranulats entgegenzuwirken und somit den Verstärkungsstoff dem thermoplastischen Material in schonender Weise beizumischen. Erfindungsgemäß geschieht dies dadurch, daß das Zusatzgranulat durch zwischen den Zuführungsstellen für das Zusatzgranulat und den Verstärkungsstoff vorgesehene Misch- und Knetelemente mit der Schmelze homogen vermischt und dabei oberflächlich nur soweit abgeschmolzen wird, daß im Bereich der Zuführung des Verstärkungsstoffes das Zusatzgranulat im Inneren noch seine feste Form aufweist.

Im Gegensatz zu der vorstehend erwähnten DE-A- 1 927 271 bekannten Vorrichtung wird also durch die Anordnung der Misch- und Knetelemente zwischen den Zuführungstellen für das Zusatzgranulat und dem Verstärkungsstoff, also noch vor der Zuführungsstelle für den Verstärkungsstoff, erreicht, daß einerseits das Zusatzgranulat weitgehend homogen in der Schmelze enthalten ist, wenn die Schmelze mit dem Zusatzgranulat auf die Zuführungsstelle für den Verstärkungsstoff trifft, der nunmehr besonders schonend mit der Schmelze vermischt wird, da das Zusatzgranulat an dieser Stelle oberflächlich bereits etwas abgeschmolzen ist, im Inneren jedoch seine feste Form noch erhalten hat, so daß andererseits durch das Zusatzgranulat eine intensive Einmischung des Verstärkungsstoffs erfolgt, der dabei jedoch selbst wegen der gleichmäßigen Erweichung bis zur Verflüssigung an der Oberfläche des Zusatzgranulats nur geringen Biege- und Scherbeanspruchungen ausgesetzt wird, so daß die starke Zerkleinerungswirkung des Zusatzgranulates wie bei der bekannten Vorrichtung damit aufgehoben ist. Wegen der Einhüllung des Zusatzgranulates durch erschmolzenes Material wird der Verstärkungsstoff keiner trockenen Reibung ausgesetzt, da die das Zusatzgranulat einhüllende Schmelze in Bezug auf den Verstärkungsstoff gewissermaßen als Schmierung wirkt, dieses also entsprechend schonend behandelt, wobei aber dennoch der intensive Einmischungseffekt durch das Zusatzgranulat erhalten bleibt. Darüber hinaus ergibt sich der erwünschte Effekt der Kühlung des erschmolzenen Materials, so daß dieses keinen zu hohen thermischen Beanspruchungen ausgesetzt ist.

Bei dem Zusatzgranulat kann es sich um das gleiche thermoplastische Ausgangsmaterial oder auch um ein anderes zur Zumischung geeignetes Material handeln.

Das Zusatzgranulat führt man zweckmäßig mit einer solchen Menge zu, daß es 10 bis 60%, vorzugsweise 30 bis 50%, der gesamten Granulatmenge ausmacht.

Als Verstärkungsstoff werden vor allem Fasern, insbesondere Glas- oder Carbonfasern verwendet. Außerdem können als Verstärkungsstoff auch Glaskugeln verwendet werden.

Die Erfindung bezieht sich weiterhin auf einen Schneckenextruder zur Durchführung des oben beschriebenen Verfahrens, bei dem in bekannter Weise mehrere längs der Extruderachse verteilte Zuführungskanäle vorgesehen sind. Ein derartiger Schneckenextruder ist aus der oben erwähnten DE-A- 26 14 136 bekannt.

Der erfindungsgemäß Schneckenextruder ist derart gestaltet, daß der Zuführungskanal für das Zusatzgranulat am Anfang des Mischbereichs liegt und daß der Zuführungskanal für den Verstärkungsstoff so dicht nach dem Zuführungskanal für das Zusatzgranulat angeordnet ist, daß bei Betrieb des Extruders das Zusatzgranulat, das in die Schmelze eingebettet wird, im Bereich der Zuführung des Verstärkungsstoffes nur oberflächlich abgeschmolzen ist und im Inneren noch seine feste Form aufweist, und daß zwischen den beiden Zuführungskanälen die Schnecke durch Misch- bzw. Knetelemente unterbrochen ist.

Die beiden Zuführungskanäle liegen also relativ dicht beieinander, so daß das Zusatzgranulat, wenn es bei seinem Transport durch den Schneckenextruder in den Bereich des Zuführungskanals für den Verstärkungsstoff gelangt, in die Schmelze noch ohne wesentliche Abschmelzung eingemischt ist, wobei diese Einmischung durch die zwischen den beiden Zuführungskanälen angeordneten Misch- und Knetelemente herbeigeführt wird.

Der zur Durchführung des erfindungsgemäßen Verfahrens verwendete Schneckenextruder kann als Einschneckenextruder oder als Doppelschneckenextruder ausgebildet sein.

Es hat sich als zweckmäßig herausgestellt, dem dem Mischbereich vorhergehenden Aufschmelzbereich einen Schneckendurchmesser zu geben, der kleiner ist als der Schneckendurchmesser im Mischbereich, wobei die Schnecken im Aufschmelzbereich eine größere Gangzahl aufweisen als im Mischbereich. Hierdurch ergibt sich eine Vergrößerung des freien Querschnitts im Mischbereich, was der Zuführung sowohl des Zusatzgranulats als auch des Verstärkungsstoffs zugute kommt. In den betreffenden Zuführungskanälen ergibt sich dann keinerlei Rückstau.

Ausführungsbeispiele der Erfindung sind in den Figuren dargestellt. Es zeigen:
Fig. 1 einen Einschneckenextruder,
Fig. 2 einen Zweischneckenextruder mit Abstufung des Schneckendurchmessers,
Fig. 3 einen Querschnitt längs der Linie A-A aus Fig. 2,
Fig. 4 einen Querschnitt längs der Linie B-B aus Fig. 2.

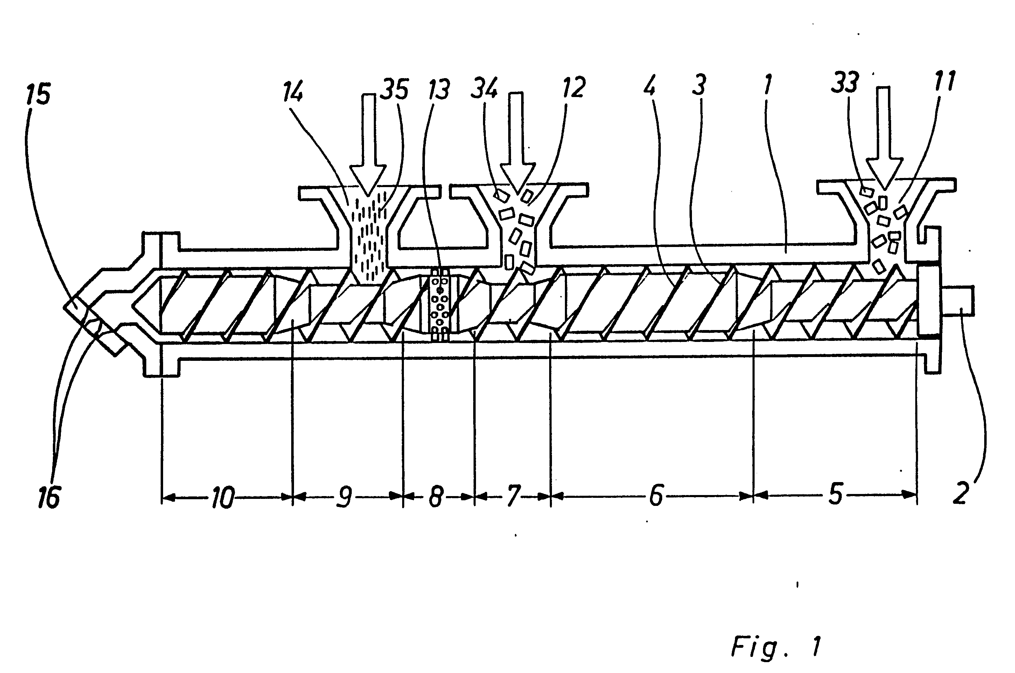

Der in der Fig. 1 dargestellte Einschneckenextruder besteht aus dem Gehäuse 1, in das die Schnecke 2 mit den beiden Gängen 3 und 4 eingesetzt ist. Die Schnecke 2 ist in Bereiche unterschiedlichen Kerndurchmessers eingeteilt, wobei der Bereich 5 einen geringeren Kerndurchmesser aufweist als der folgende Bereich 6. Die Bereiche 7 und 9 weisen dann wieder den gleichen Kerndurchmesser auf wie der Bereich 5, wogegen die Bereiche 8 und 10 den gleichen größeren Kerndurchmesser aufweisen wie der Bereich 6. In den Bereichen mit geringerem Kerndurchmesser, nämlich den Bereichen 5, 7 und 9 wird dem Einschneckenextruder Material zugeführt, und zwar dem Bereich 5 über den Einfüllkanal 11. Es handelt sich dabei um in Granulatform vorliegendes thermoplastisches Material 33 das aus dem Bereich 5 in den Bereich 6 überführt wird, wo es infolge des größeren Kerndurchmessers einer intensiven Scherung ausgesetzt wird, so daß es aufgeschmolzen wird. Die Bereiche 5 und 6 bilden dabei also den Aufschmelzbereich. Es folgt dann der Bereich 7, in dem bereits erschmolzenes thermoplastisches Material vorliegt. In diesem Bereich wird über den Zuführungskanal 12 Zusatzgranulat 34 zugeführt, das sich aufgrund des hier gegebenen geringeren Kerndurchmessers der Schnecke 2 ohne Rückstau dem erschmolzenen thermoplastischen Material 33 beimischen läßt. In folgenden Bereichen 8 sind als Misch- bzw. Knetelemente wirkende Stifte 13 vorgesehen, die hier auch unter Berücksichtigung des vorhandenen größeren Kerndurchmessers auf das zugeführte Material eine intensive Mischwirkung ausüben, wobei sich das über den Zuführungskanal 12 zugeführte Zusatzgranulat 34 dem aufgeschmolzenen thermoplastischen Material 33 innig beimischt. Es folgt dann der Bereich 9 mit dem weiteren Zuführungskanal 14, über den dem im Extruder transportierten Material ein Verstärkungsstoff 35, z.B. Glasfasern zugeführt wird. Auch hier bewirkt der reduzierte Kerndurchmesser, daß sich im Zuführungskanal 14 kein Rückstau ergibt. In dem anschließenden Bereich 10 erfolgt dann die Mischung von erschmolzenem thermoplastischem Material 33, dem Zusatzgranulat 34 und dem Verstärkungsstoff 35, wobei hier das Zusatzgranulat 34 ebenfalls erschmolzen wird, wobei dem bereits erschmolzenen thermoplastischen Material 33 in erheblichem Umfang Wärme entzogen wird, so daß dieses Material keiner zu großen thermischen Belastung ausgesetzt wird. Dabei spielen die Bereiche 7, 8, 9 und 10 die Rolle des Mischbereichs.

Das endgültig gemischte Material, das aus einem Thermoplast und dem Verstärkungsstoff besteht, wird dann über die Düsenplatte 15 mit den Düsen 16 ausgepreßt.

Das im Bereich 7 über den Zuführungskanal 12 zugeführte Zusatzgranulat 34 wird in diesem Bereich zunächst keinem besonders großen Druck ausgesetzt, weil hier die Schnecke 2 mit geringerem Kerndurchmesser ausgebildet ist. Es erfolgt anschließend die Mischung von erschmolzenem thermoplastischem Material 33 und Zusatzgranulat 34 im Bereich 8, in dem aber vor allem wegen der Kürze dieses Bereichs das Zusatzgranulat 34 keine wesentliche Abschmelzung erfährt, so daß es in dieser Form in den Bereich 9 eintritt, wo über den Zuführungskanal 14 der Verstärkungsstoff 35 zugeführt wird. In diesem Bereich 9 existiert wieder ein geringerer Kerndurchmesser, so daß die hier vorhandenen Materialien zunächst ohne wesentlichen Druck transportiert werden, bis sie schließlich in den längeren Bereich 10 mit größerem Kerndurchmesser gelangen, wo dann wegen der gegebenen Länge und dem größeren Kerndurchmesser eine intensive Durchmischung gegeben ist, wobei aber der Verstärkungsstoff 35 weitgehend geschont wird, da er nicht direkt mit dem hier noch in dieser Form vorhandenen Zusatzgranulat 34 zusammentrifft, da dieses bereits durch erschmolzenes thermoplastisches Material 33 umgeben ist, was in Bezug auf den Verstärkungsstoff 35 eine gewisse Schmierwirkung bedeutet.

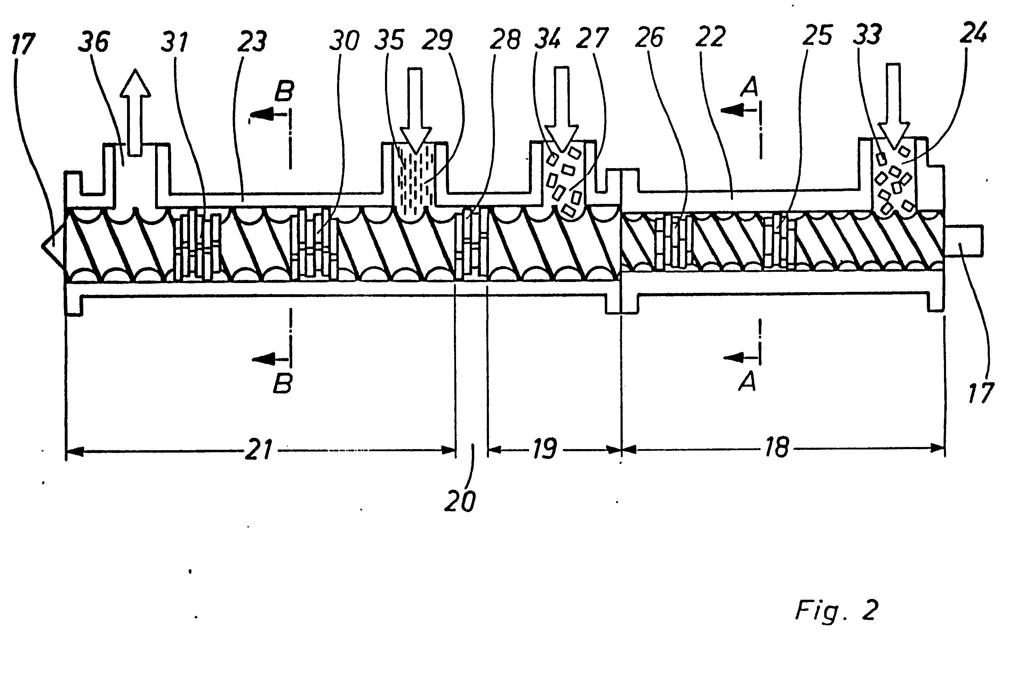

Bei dem in der Fig. 2 dargestellten Schneckenextruder handelt es sich um einen Doppelschneckenextruder, von dem allerdings nur die eine Schnecke 17 sichtbar gezeichnet ist. Die Schnecke 17 ist in dem Gehäuse 22/23 gelagert, wobei der Gehäuseteil 22 mit geringerem Durchmesser als der Gehäuseteil 23 ausgebildet ist. Dementsprechend weisen die im Gehäuseteil 22 geführten Schneckenteile einen geringeren Außendurchmesser auf, als die im Gehäuseteil 23 geführten Schneckenteile.

Über den Einfüllkanal 24 wird dem Doppelschneckenextruder thermoplastisches Material 33 in Form von Granulat zugeführt, das im Aufschmelzbereich 18 aufgeschmolzen wird. Innerhalb des Aufschmelzbereichs 18 sind die Knetelemente 25 und 26 vorgesehen, die das Aufschmelzen unterstützen. An den Bereich 18 schließen sich die Bereiche 19, 20 und 21 an, die gegenüber dem Aufschmelzbereich 18 einen grösseren Schneckendurchmesser aufweisen. Gleichzeitig besitzt die Schnecke 17 im Aufschmelzbereich 18 eine größere Gangzahl als in den Bereichen 19, 20 und 21, die hier den Mischbereich 19, 20, 21 bilden. Hierdurch wird erreicht, daß im Mischbereich ein gegenüber dem Aufschmelzbereich 18 vergrößerter freier Querschnitt gegeben ist, so daß sich im Mischbereich 19, 20, 21 sowohl das Zusatzgranulat 34 als auch der Verstärkungsstoff 35 ohne Gefahr eines Rückstaus beimischen läßt.

Im Bereich 19 wird über den Zuführungskanal 27 das Zusatzgranulat 34 zugeführt, das dann im Bereich 20 mittels der hier vorhandenen Knetelemente 28 dem aufgeschmolzenen thermoplastischen Material beigemengt wird. Anschließend daran erfolgt über den Zuführungskanal 29 die Beimischung von Verstärkungsstoff 35, z.B. Glasfasern, die nun entlang des Bereichs 21 unter der Einwirkung des zunächst noch in dieser Form vorhandenen Zusatzgranulats 34 dem erschmolzenen thermoplastischen Material 33 beigemischt werden, wobei diese Beimischung durch die Knetelemente 30 und 31 intensiviert wird. In dem relativ langen Bereich 21 erfolgt dann das vollständige Aufschmelzen des Zusatzgranulats 34 und dabei das Einmischen des Verstärkungsstoffs 35, der dabei schonend behandelt wird, da das Zusatzgranulat 34 nie mit trockener Reibung auf den Verstärkungsstoff 35 treffen kann. Das auf diese Weise erzeugte, homogenisierte Material tritt dann am Ende des Bereichs 21 aus dem Doppelschneckenextruder aus.

Bei dem Extruder gemäß Fig. 2 ist noch die Entgasungsöffnung 36 vorgesehen, die in bekannter Weise dafür sorgt, daß entstandene Gase frei abziehen können.

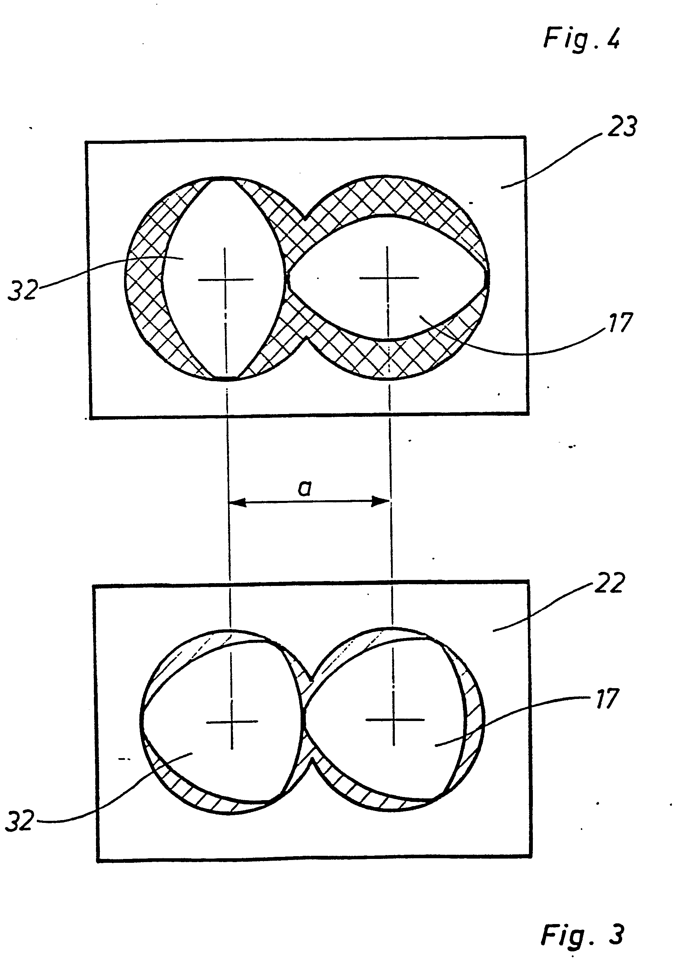

In den Fig. 3 und 4 ist der bekannte Aufbau eines Doppelschneckenextruders in Querschnittszeichnung dargestellt. Dabei zeigt die Fig. 3 den Querschnitt gemäß der Linie A-A aus Fig. 2. Es liegen hier, wie ersichtlich, zwei dreigängige Schnecken 17 und 32 vor.

Fig. 4 zeigt den Querschnitt längs der Linie B-B aus Fig. 2, aus der sich ergibt, daß hier die beiden Schnecken 17 und 32 zweigängig ausgebildet sind. Die beiden Schnecken 17 und 32 besitzen durchgehend gleichbleibenden Achsabstand a.

**Patentansprüche**

1. Verfahren zum Füllen vom thermoplastischem Material mit Verstärkungsstoff, bei dem das als Granulat zugeführte thermoplastische Material in einem Schneckenextruder aufgeschmolzen wird, bei dem im Mischbereich des Extruders der Schmelze Zusatzgranulat und danach getrennt davon der Verstärkungsstoff zugeführt wird, dadurch gekennzeichnet, daß das Zusatzgranulat (34) durch zwischen den Zuführungsstellen (12, 14) für das Zusatzgranulat (34) und den Verstärkungsstoff (35) vorgesehene Misch- und Knetelemente (13, 28) mit der Schmelze homogen vermischt und dabei oberflächlich nur soweit abgeschmolzen wird, daß im Bereich der Zuführung des Verstärkungsstoffes (35) das Zusatzgranulat (34) im Inneren noch seine feste Form aufweist.

2. Verfahren nach Anspruch 1, dadurch gekennzeichnet, daß das Zusatzgranulat (34) 10 bis 60%, vorzugsweise 30 bis 50% der gesamten Granulatmenge ausmacht.

3. Verfahren nach Anspruch 1 oder 2, dadurch gekennzeichnet, daß als Verstärkungsstoff (35) Fasern, insbesondere Glas- oder Carbonfasern, verwendet werden.

4. Verfahren nach Anspruch 1 oder 2, dadurch gekennzeichnet, daß als Verstärkungsstoff (35) Glaskugeln verwendet werden.

5. Schneckenextruder zur Durchführung des Verfahrens nach Anspruch 1 mit mehreren längs der Extruderachse verteilten Zuführungskanälen, dadurch gekennzeichnet, daß der Zuführungskanal (12, 27) für das Zusatzgranulat (34) am Anfang des Mischbereichs (7, 8, 9, 10, 19, 20, 21) liegt und daß der Zuführungskanal (14, 29) für den Verstärkungsstoff (35) so dicht nach dem Zuführungskanal (12, 27) für das Zusatzgranulat (34) angeordnet ist, daß bei Betrieb des Extruders das Zusatzgranulat (34), das in die Schmelze eingebettet wird, im Bereich der Zuführung des Verstärkungsstoffes nur oberflächlich abgeschmolzen ist und im Inneren noch seine feste Form aufweist, und daß zwischen den beiden Zuführungskanälen (12, 27; 14, 29) die Schnecke (2; 17, 32) durch Misch- bzw. Knetelemente (13, 28) unterbrochen ist.

6. Schneckenextruder nach Anspruch 5, dadurch gekennzeichnet, daß er als Einschneckenextruder (2) ausgebildet ist.

7. Schneckenextruder nach Anspruch 5, dadurch gekennzeichnet, daß er als Doppelschneckenextruder (17, 32) ausgebildet ist.

8. Schneckenextruder nach Anspruch 7, dadurch gekennzeichnet, daß in dem dem Mischbereich (19, 20, 21) vorhergehenden Aufschmelzbereich (18) der Schneckendurchmesser kleiner ist als im Mischbereich (19, 20, 21), wobei die Schnecken (17, 32) im Aufschmelzbereich (18) eine größere Gangzahl aufweisen als im Mischbereich (19, 20, 21).

## Claims

1. A method of filling thermoplastic material with a reinforcing material wherein the thermoplastic material is supplied in granulate form and is melted in screw-type extrusion apparatus, and wherein additional granulate and then the reinforcing material are supplied separately to the melt in the mixing section of the extrusion apparatus, characterized in that the additional granulate (34) is homogenously blended with the melt by mixing and kneading elements (13, 28) provided between the sites of introduction (12, 14) for the additional granulate (34) and the reinforcing material (35), and in that in the process the additional granulate is melted superficially only to the extent of still being solid interiorly in the area of introduction of the reinforcing material (35).

2. A method as in claim 1, characterized by the additional granulate (34) amounting to 10 to 60%, and preferrably to 30 to 50%, of the total granulate.

3. A method as in claim 1 or 2, characterized by using fibers and particularly glass or carbon fibers as reinforcing material (35).

4. A method as in claim 1 or 2, characterized by using glass spheres as reinforcing material (35).

5. Screw-type extrusion apparatus for performing the method of claim 1, comprising a plurality of feed passages distributed along the extruder axis, characterized in that the feed passage (12, 27) for the additional granulate (34) is located at the beginning of the mixing section (7, 8, 9, 10, 19, 20, 21), in that the feed passage (14, 29) for the reinforcing material (35) is located adjacent the feed passage (12, 27) for the additional granulate a distance small enough that during extruder operation the additional granulate (34) embedded in the melt will melt only superficially and maintain its solid form interiorly in the introduction area of the reinforcing material, and in that the screw (2; 17, 32) is interrupted between both feed passages (12, 27; 14, 29) by mixing and kneading elements (13, 28).

6. Screw-type extrusion apparatus as in claim 5, characterized in that it is formed as a single-screw extruder (2).

7. Screw-type extrusion apparatus as in claim 5, characterized in that it is formed as a dual-screw extruder (17, 32).

8. Screw-type extruder as in claim 7, characterized in that the screw diameter is smaller in the melting section (18) preceding the mixing section (19, 20, 21) than in the mixing section (19, 20, 21) itself, the screws (17, 32) having a greater number of threads in the melting section (18) than in the mixing section (19, 20, 21).

## Revendications

1. Procédé pour introduire une charge d'un matériau de renforcement dans une matière thermoplastique où on fond la matière thermoplastique ajoutée sous forme de granulés, dans une extrudeuse à vis, on ajoute, dans la zone de mélange de l'extrudeuse, des granulés supplémentaires au produit fondu, puis séparément, le matériau de renforcement, caractérisé en ce que les granulés supplémentaires (34) sont mélangés de façon homogène au produit fondu, par des éléments de mélange et de malaxage prévus entre les points d'alimentation (12, 14) en granulés supplémentaires (34) et en matériau de renforcement (35), et ne sont fondus que superficiellement de telle sorte que, dans la zone d'alimentation en matériau de renforcement (35), les granulés supplémentaires (34) présentent encore intérieurement leur état solide.

2. Procédé selon la revendication 1, caractérisé en ce que les granulés supplémentaires (34) représentent entre 10 et 60%, de préférence entre 30 et 50%, de la quantité totale de granulés.

3. Procédé selon la revendication 1 ou 2, caractérisé en ce que l'on utilise des fibres, notamment des fibres de verre ou de carbone, comme matériau de renforcement (35).

4. Procédé selon la revendication 1 ou 2, caractérisé en ce que l'on utilise des billes de verre comme matériau de renforcement (35).

5. Extrudeuse à vis pour la mise en oeuvre du procédé selon la revendication 1, comportant plusieurs conduits d'alimentation répartis suivant l'axe de l'extrudeuse, caractérisée en ce que le conduit d'alimentation (12, 27) en granulés supplémentaires (34) se situe au début de la zone de mélange (7, 8, 9, 10, 19, 20, 21) et en ce que le conduit d'alimentation (14, 29) en matériau de renforcement (35) est disposé après le conduit d'alimentation (12, 27) des granulés supplémentaires (34), suffisamment près pour que, pendant le fonctionnement de l'extrudeuse, les granulés supplémentaires (34) qui se trouvent dans le produit fondu, ne soient fondus que superficiellement dans la zone d'alimentation en matériau de renforcement et présentent intérieurement encore leur état solide, et en ce que la vis (2; 17, 32) est interrompue par des éléments de mélange ou de malaxage (13, 28) entre les deux conduits d'alimentation (12, 27; 14, 29).

6. Extrudeuse à vis selon la revendication 5, caractérisée en ce qu'elle est conformée en extrudeuse à vis unique (2).

7. Extrudeuse à vis selon la revendication 5, caractérisée en ce qu'elle est conformée en extrudeuse à deux vis (17, 32).

8. Extrudeuse à vis selon la revendication 7, caractérisée en ce que le diamètre de la vis est inférieur dans la zone de fusion (18) qui précède la zone de mélange (19, 20, 21) à celui de la zone de mélange (19, 20, 21), les vis (17, 32) présentant un plus grand nombre de filets dans la zone de fusion (18) que dans la zone de mélange (19, 20, 21).

Fig. 1

0118847

Fig. 2

Fig. 4

Fig. 3